# EUROPEAN PATENT APPLICATION

(11) **EP 1 927 784 A1**
(43) Date of publication of application: **04.06.2008**
(21) Application number: 06024779.8
(22) Date of filing: 30.11.2006
(51) Int. Cl.: F16F 15/32

(54) **Wheel balancing device**

(71) Applicant: P.C. PRODUCTS INTERNATIONAL CO., LTD., Samutprakarn 10560 (TH)
(72) Inventor: Chancharoen, Pravuth, Ampur Bangkor Samutprakarn 10560 (TH)
(74) Representative: Pautex Schneider, Nicole Véronique

(57) **Abstract**

A wheel balancing device (1) of this invention comprising a wheel balancing body having a wheel rim engaging bar (2) made of iron metal or iron-based metal component to be formed in any shape as required. Being provided on one side of the wheel balancing body is an engaging part (3) fixed thereto. The engaging part is composed of an engaging plate (4) having one end engaged and fixed to one end of the wheel rim engaging bar by a locking means and the other end (5) is bent as an upper curve to be locked and fixed to a wheel rim of an automobile. The wheel rim engaging bar and a part of engaging plate are enwrapped by the outer cover plate made of plastic or plastic-contained composition.

## Description

### FIELD OF THE INVENTION

The present invention relates to a wheel balancing device, especially a wheel balancing device for an automobile.

### BACKGROUND OF THE INVENTION

In an automobile wheel assembly including a wheel and a tire, a dynamic imbalance may exist when the wheel is rotated. Generally, to compensate for this imbalance, the wheel is provided with a wheel balancing device.

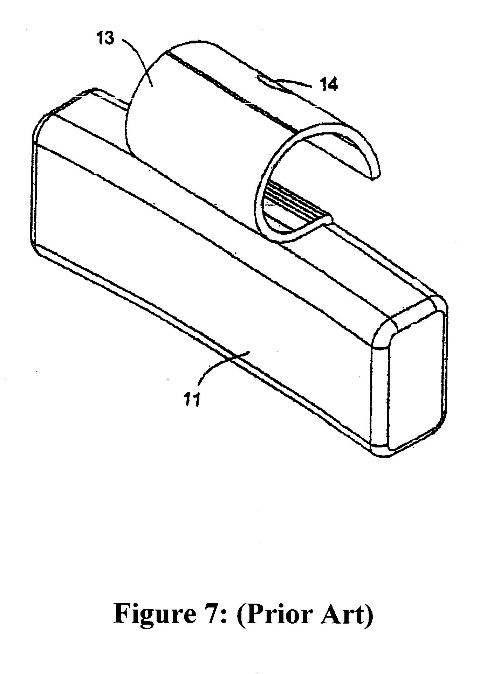

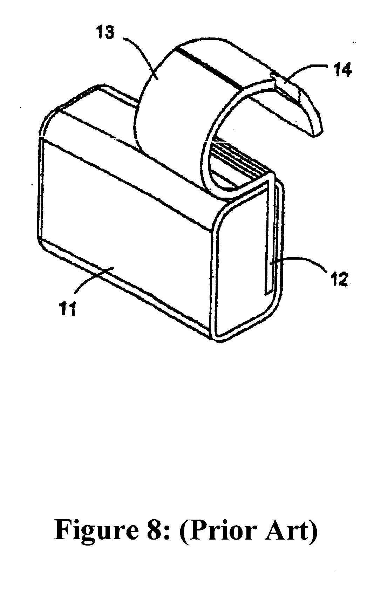

As shown in Figs.7 and 8, a conventional wheel balancing device comprising a wheel balancing body 11 made of lead in various form of size and weight as provided such as 5 grams or 10 grams. A clip including an locking plate 12 having one end being embedded in the wheel balancing body 11 thereby define a wheel balancing device and the other end of the plate 12 being rolled as a curve in upper part 13 which is a long flat plate and some curve part for locking and fixing to a wheel rim of a tire. On the top of the said upper part curve 13 may provided with a number of punched holes 14 to be fastened by locking members (not shown).

However, since the material containing the lead has a problem in an influence to a natural environment, the wheel balancing device has the body made of an iron, iron alloy or other materials being friendly with the environment has been developed.

For example, Japanese U.M. No. 3046046 discloses a balancing device comprised of a weight body made of cast iron, and an engaging member made of a steel plate bent and fixed to the weight body by a rivet.

The balancing device according to Japanese U.M. No. 3046046 has an disadvantage that the numbers of parts and a manufacturing cost of the balancing device increase, since the engaging member is fixed to the weight body by riveting. Moreover, in case that the weight body is constructed from a hard material such as an iron, compressing and flattening a protrusion to result in a rivet is relatively difficult.

Another example, US Patent No. 6250721 discloses a balancing device comprising a weight body made of ductile casting iron and a clip coupled to a groove at a central portion of the weight body. Said clip is fitted into the groove by caulking a head of a pillar at a bottom surface of the groove.

On the other hand, the wheel balancing device disclosed in aforesaid US Patent Publication has some defects leaved that the clip is coupled to the underside of the weight body, if there are some defects while caulking the cast-iron which will often causing crack in the metallic ground-boundary and causing broken afterward, sometimes even the clip is hammered to the rim of the wheel, but the weight body will be loosed freely. Also, the manufacturing cost of the weight body increases due to the protruded pillar formed within the groove.

Thus, there exists a need for an improved wheel balancing device, which can reduce the cost problem and can be firmly fixed the clip to the weight body.

### SUMMARY OF THE INVENTION

The purpose of the present invention is made in view of the above mentioned circumstances, and has an object to provide a new and improved wheel balancing device, which is simple to form and low cost and can be securely confirm in fixing between the clip and the weight body.

The wheel balancing device according to the present invention comprising a wheel balancing body including a wheel rim engaging iron metal bar or iron-based metal component to be formed in any shape and being provided on one side of the wheel balancing body is an engaging part fixed thereto. The engaging part is composed of engaging plate having one end being engaged with one end of the wheel rim engaging bar by a locking means and the other end is bent as an upper curve to be locked and fixed to a wheel rim of an automobile. The wheel rim engaging bar, having one of the engaging part fixed thereto, is enwrapped by the outer cover plate made of plastic or plastic-contained composition.

The wheel balancing device of this invention is preferably made of iron metal or iron-based metal or other material substitute of using lead thereby meet the standpoint of environmental protection. Further, because the wheel balancing body and the engaging part are coupled together by enwrapping such two parts with plastic or plastic-contained composition, forming is easier and lower in cost, also can prevent rust caused by outer moisture and being easily to perform color decoration.

### BRIEF DESCRIPTION OF THE DRAWINGS

The invention will now be described by way of example with reference to the accompanying drawings wherein:
Fig. 1 shows an exploded, perspective view showing the individual parts of the wheel balancing device according to an embodiment of this invention;
Fig.2 shows a perspective view of an embodiment of the wheel balancing device of this invention when the engaging part is fixed to the wheel balancing body;
Fig.3 shows a perspective view of another embodiment of the wheel balancing device of this invention when the engaging part is fixed to the wheel balancing body;
Fig.4 shows an embodiment of the wheel balancing device of this invention having outer cover plastic plate enwrapped thereto;
Fig.5 shows another embodiment of the wheel balancing device of this invention having outer cover plastic plate enwrapped thereto;
Fig.6 shows an embodiment of the wheel balancing device of this invention being installed with a wheel rim of an automobile;
Fig.7 shows a conventional wheel balancing device;
Fig. 8 shows another embodiment of the conventional wheel balancing device;

### DETAILED DESCRIPTION OF THE PREFERRED EMBODIMENT

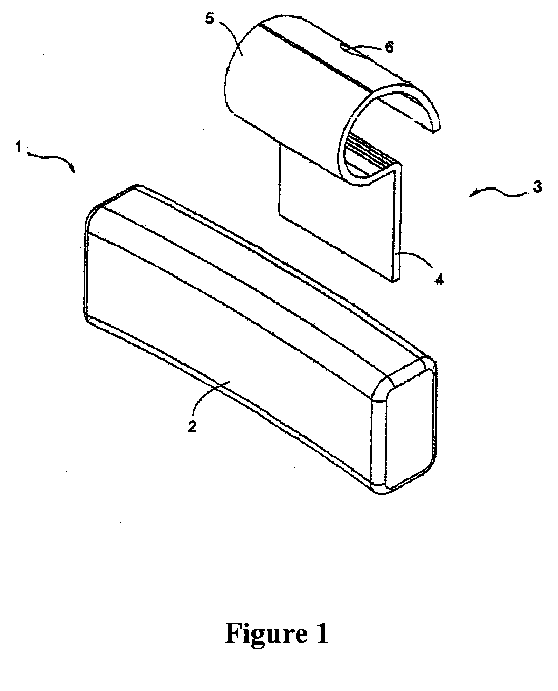

According to Fig. 1, it shows a wheel balancing device comprising a wheel balancing body 1 and an engaging part 3. The wheel balancing body 1 composes of a wheel rim engaging bar 2 made of iron metal or iron-based metal component which is formed in various shape with appropriate weight as required, for instance 5 grams or 10 grams etc.

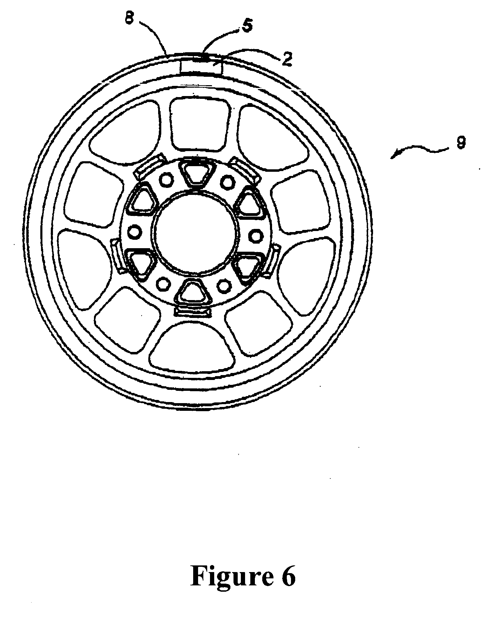

The engaging part 3 comprises an engaging plate 4 having one end being provided for engaging and fixing to one end of the wheel rim engaging bar 2 of the wheel balancing body 1 and the other end is bent into the form of an upper curve 5, in which the said curve can be locked and fixed to a wheel rim of an automobile (as shown in Fig.6). The engaging part 3 may be provided, on the upper curve 5, with a number of punched holes 6 to fasten and support the engaging member inserted thereto (not shown in Fig.).

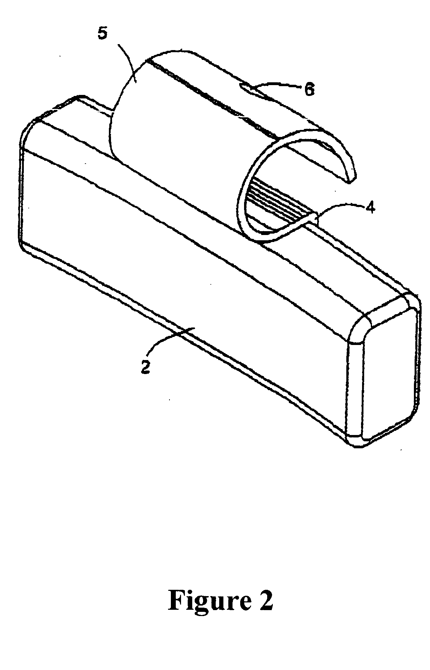

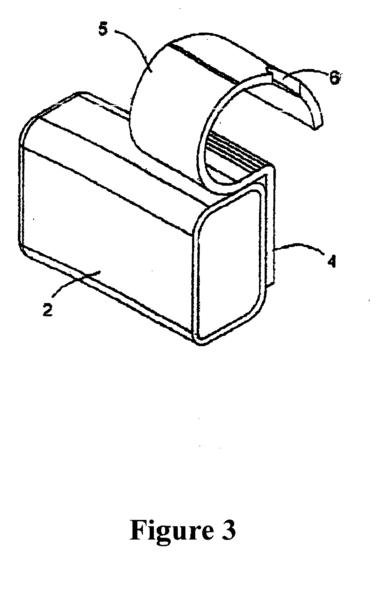

According to Fig.2, the engaging part 3 is mounted to the wheel balancing body 1 wherein one end of the engaging plate 4 is overlapped and fixed to one side of the wheel rim engaging bar 2 (substantially shown in Fig.3) by a locking means, thereby defining the wheel balancing device.

Fig.3 shows the other embodiment of the engaging part 3 mounted to the wheel balancing body 1 wherein one end of the engaging plate 4 being overlapped and fixed to one side of the wheel rim engaging bar 2 by a locking means, thereby defining the wheel balancing device.

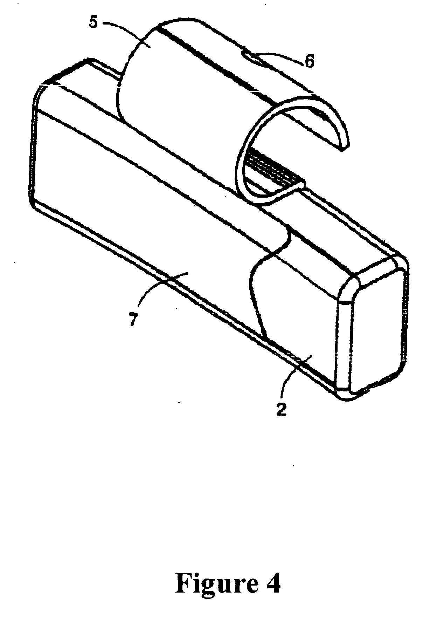

According to Fig.4, the wheel balancing device composed of the wheel balancing body 1 and the engaging part 3 is then enwrapped by the outer cover plate 7. The outer cover plate 7 made of plastic as a main composition and enwraps the wheel rim engaging bar 2 and some part or the whole part of the engaging plate 4 through any coating means. For instance, dipping the body having the engaging part at one end into a crucible containing plastic material or plastic composition, or coating such device with plastic or plastic-contained composition by injection into the mold. Preferably, the plastic enwrapping should be performed by conventional injection molding method and use heat stabilized Polyamide(PA) 66 resin as enwrapping material. The thickness of enwrapping layer is in the range of between 1-10 mm., preferably at the range of 3-5 mm. As the method described above, the operation of fixing the wheel balancing body 1 to the engaging part 3 can be performed without any requirement of additional engaging parts. Therefore, the manufacturing cost of the wheel balancing device of this invention will be lower, also the moisture and scratch from outside can be avoided.

### ANOTHER EMBODIMENT OF THE INVENTION

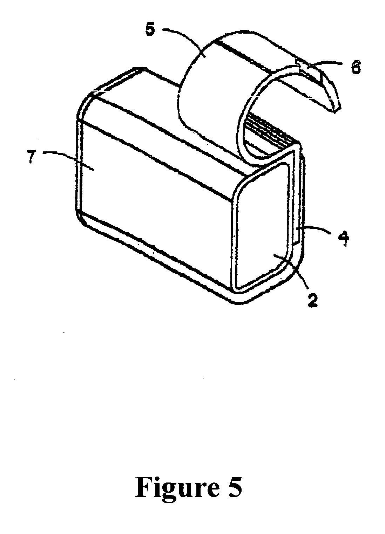

Fig.5 shows the other embodiment of the wheel balancing device of this invention. The wheel balancing device comprises the outer cover plate, in which the wheel rim engaging bar 2 and some part or the whole part of the engaging plate 4 are enwrapped by the outer cover plate 7 in order to hold the engaging plate 4 and the wheel rim engaging bar 2 together and prevent the wheel balancing device from the moisture and any damages.

According to Fig.6, the wheel balancing device of this invention is mounted to the wheel rim of an automobile by a mounting process. The process comprises the steps, in which the upper curve 5 is attached and fixed to the outer wheel rim 8 of the wheel 9 wherein the wheel rim engaging bar 2 will engage and fix to the lower part of the outer wheel rim 8 of the wheel 9 in order to balance the wheel 9 during moving of the automobile.

### EFFECTS OF THE INVENTION

According to the wheel balancing device according to the present invention, there can be obtained the following advantages:
a) the device is preferable environmental protection because lead having toxicity to the human body is not used;
b) since the wheel balancing body and the engaging part is fixed together by enwrapping of covering plastic plate, the number and complexity of the operations required to attach the engaging part to the body is reduced which subsequently, reduces the cost of the tooling;
c) the outer covering plastic plate gives an advantage in that the engaging plate is fixed to the wheel rim engaging bar tightly and prevent the wheel balancing device from moisture so that rust and any damages can be avoided;
d) At the same time, Logo, model numbers and sizes could be marked on to the products together during the plastic injection process. This reduces additional cost of process and Logo tooling;
e) the color coating and aesthetic decoration can perform at the same time as enwrapping plastic plate to fix the wheel balancing body with the engaging part, as a result the cost of manufacturing can be further reduced.

### THE BEST MODE OF THE INVENTION

As same as described above

## Claims

1. A wheel balancing device comprising a wheel balancing body including a wheel rim engaging bar being formed in various shape having weight as required and; an engaging part comprising of an engaging plate having one end fixed to the wheel rim engaging bar of the wheel balancing body and the other end is bent into the upper curve part to lock and fix to the outer wheel rim of an automobile wheel;
**characterized in that**, in order to secure the engaging plate and the wheel rim engaging bar to thereby provide the wheel balancing device, the said two parts are coupled together by means of enwrapping them by the outer cover plate, in which the outer cover plate is made of plastic or plastic-contained composition.

2. A wheel balancing device as claimed in claim 1 having a part of the engaging plate overlapped and fixed to one side of the wheel rim engaging bar by means of a locking member.

3. A wheel balancing device as claimed in claims 1 or 2 wherein the wheel balancing body having the engaging part fixed at one end is enwrapped by plastic or plastic-contained composition by means of injection molding.

4. A wheel balancing device as claimed in any one of claims 1 to 3 wherein the thickness of plastic or plastic-contained composition enwrapped on the wheel balancing device is in the range of 1-10 mm.

5. A wheel balancing device as claimed in any one of claims 1 to 4 wherein the thickness of plastic or plastic-contained composition enwrapped on the wheel balancing device is in the range of 3-5 mm.
